Europäisches Patentamt

European Patent Office

Office européen des brevets

(11) Publication number: **0 178 699 B1**

# EUROPEAN PATENT SPECIFICATION

(45) Date of publication of patent specification: 27.03.91    (51) Int. Cl.⁵: **C01B 33/26**

(21) Application number: **85201413.3**

(22) Date of filing: **05.09.85**

(54) **A process for the preparation of composite crystalline aluminium silicates and their use as catalyst (carrier).**

(30) Priority: **18.09.84 GB 8423615**

(43) Date of publication of application:
**23.04.86 Bulletin 86/17**

(45) Publication of the grant of the patent:
**27.03.91 Bulletin 91/13**

(84) Designated Contracting States:
**AT BE CH DE FR GB IT LI NL SE**

(56) References cited:
**EP-A- 0 100 115      EP-A- 0 101 183**
**EP-A- 0 116 203      EP-A- 0 121 730**
**US-A- 4 205 053      US-A- 4 259 306**

(73) Proprietor: **SHELL INTERNATIONALE RE-
SEARCH MAATSCHAPPIJ B.V.**
**Carel van Bylandtlaan 30**
**NL-2596 HR Den Haag(NL)**

(72) Inventor: **van Erp, Willibrord Adelbert**
**Badhuisweg 3**
**NL-1031 CM Amsterdam(NL)**
Inventor: **Huizinga, Tom**
**Badhuisweg 3**
**NL-1031 CM Amsterdam(NL)**
Inventor: **Seelen-Kruijssen, Josepha Maria
Elisabeth**
**Badhuisweg 3**
**NL-1031 CM Amsterdam(NL)**

(74) Representative: **Aalbers, Onno et al**
**P.O. Box 302**
**NL-2501 CH The Hague(NL)**

EP 0 178 699 B1

**Description**

The invention relates to a process for the preparation of a composite crystalline aluminium silicate. More particularly it relates to a hydrothermal process for preparing same.

Crystalline aluminium silicates, which can be distinguished from one another by certain characteristic lines occurring in their X-ray powder diffraction patterns can be prepared hydrothermally by maintaining an aqueous alkaline starting mixture comprising one or more silicon compounds, one or more aluminium compounds, one or more alkali metal compounds and one or more organic nitrogen compounds at an elevated temperature until the crystalline aluminium silicate has formed and subsequently separating crystalline silicate from the mother liquor, usually followed by washing and drying.

The right selection of reaction components comprised in the aqueous mixture and their molar ratios is of major importance in preparing the desired crystalline aluminium silicates.

It is known that the microscopic texture (e.g. the crystal shape, size, degree of smoothness and the degree of agglomeration of the ultimate crystals) of a synthetic zeolite is influenced by the organic nitrogen compound(s) present in the starting mixture used to carry out the above-described hydrothermal process.

It is described in European patent application 100 115 that previously known crystalline aluminium silicates suitable for the catalytic dewaxing of hydrocarbon oils had the disadvantage of either having a low stability or producing dewaxed oils with a low viscosity index. It was found in said European patent application that these problems can be overcome by preparing a composite crystalline aluminium silicate. Said silicate can be prepared by maintaining an aqueous starting mixture comprising one or more silicon compounds, one or more aluminium compounds, one or more alkali metal hydroxides, one or more alkali metal salts of mineral acids and a pyridine without mechanical energy being introduced (i.e. without stirring) at a temperature between 100 and 200°C.

When producing larger amounts of composite crystalline aluminium silicate on a (semi-)commercial scale it is highly desirable that silicates of constant quality and composition are obtained. This implies that process mixtures which comprise a considerable number of compounds are preferably kept in motion continuously or intermittently (e.g. by stirring) in order to keep the composition of the mixtures reasonably constant over their whole volume.

It has now been found that from an aqueous alkaline starting mixture comprising as organic nitrogen compounds a pyridine and an organic quaternary ammonium compound a composite crystalline aluminium silicate of which the X-ray powder diffraction pattern includes characteristic lines of two silicates can be reproduceably prepared, provided that the various compounds are present in the starting mixture in particular molar ratios, which are critical requirements for the process according to the present invention.

The present invention therefore relates to a process for the preparation of a composite crystalline aluminium silicate which comprises maintaining aqueous alkaline starting mixture comprising one or more silicon compounds, one or more aluminium compounds, one or more compounds of metals from Group 1a of the Periodic Table of the Elements (MX) and organic nitrogen compounds at an elevated temperature until composite crystalline aluminium silicate has formed and subsequently separating crystalline silicate from the mother liquor, wherein the various compounds are present in the starting mixture within the following molar ratios:

$$RN \quad : \quad R_4NY \quad = \quad 6\text{--}3,000,$$
$$SiO_2 \quad : \quad R_4NY \quad = \quad 200\text{--}10,000,$$
$$SiO_2 \quad : \quad Al_2O_3 \quad = \quad 60\text{--}250,$$
$$SiO_2 \quad : \quad MX \quad < \quad 10, \text{ and}$$
$$H_2O \quad : \quad SiO_2 \quad = \quad 5\text{--}65,$$

RN representing a pyridine and $R_4NY$ representing an organic quaternary ammonium compound. The Periodic Table of the Elements referred to is stated in the "Handbook of Chemistry and Physics", 55th edition, CRC Press, Ohio, USA (1975).

The expression "a pyridine" as used herein does not include quaternary ammonium compounds.

Suitably RN represents a compound selected from the group consisting of pyridine, alkyl pyridines and (substituted alkyl) pyridines, wherein the alkyl-groups preferably comprise of from 1-4 carbon atoms, and amino pyridines; most preferably RN represents pyridine.

The groups R in $R_4NY$ suitably comprise four of the same or different alkyl-groups and/or substituted

2

alkyl-groups, e.g. alkyl-groups comprising a hydroxy- and/or a halogen (e.g. bromine)-substituent; these alkyl-groups generally comprise of from 1-20, preferably of from 1-4 carbon atoms. The symbol Y in $R_4NY$ suitably represents an anion of a mineral acid or a hydroxyl ion. Preferably $R_4NY$ represents tetrapropyl ammonium hydroxide, a suitable alternative therefore being tetraethyl ammonium bromide.

The above-defined organic nitrogen compounds RN and $R_4NY$ are suitably present in the starting mixture in a solar ratio of from 25-600, preferably of from 40-450. The molar ratio in which $SiO_2$ and $R_4NY$ are present in the starting mixture is suitably of from 300-2000, preferably of from 450-1500.

The compound MX in the starting mixture preferably represents at least one of $M_nZ$ and at least one of MOH in which M represents an alkali metal ion and Z represents an anion of a mineral acid (n satisfying the electroneutrality of the compound $M_nZ$); most preferably M represents a sodium ion. The compounds $SiO_2$ and MOH are suitably present in the starting mixture in a molar ratio of from 5.2-7.8, preferably of from 5.6-7.0. In any case the aqueous starting mixture has an alkaline character which means that the pH of the starting mixture is greater than 7.

The compounds $SiO_2$, $Al_2O_3$ and $H_2O$ are preferably present in the starting mixture in the following molar ratios: $SiO_2:Al_2O_3$ = 65-200, and $H_2O:SiO_2$ = 8-50.

In the starting mixture used in the process according to the present invention various silicon- and aluminium compounds may be present. Suitable silicon compounds include water glass and amorphous silica, while suitable aluminium compounds include aluminium sulphate and sodium aluminate. Suitable alkali metal salts of mineral acids include sulphates, nitrates and phosphates It is not necessary, however, that the above-mentioned compounds are added to the aqueous starting mixture in that form. They may also be formed from other reaction components, for instance from water glass and sulphuric acid. A very suitable starting mixture for the present process comprises amorphous silica, aluminium sulphate, sodium hydroxide, sodium sulphate, pyridine, water and either tetrapropyl ammonium hydroxide or tetraethyl ammonium bromide.

The composite crystalline aluminium silicates are suitably prepared in the manner as described hereinbefore by maintaining the starting mixture, usually under autogenous pressure, at an elevated temperature, preferably of from 100-250 °C for 24-190 hours under stirred conditions, until composite crystalline aluminium silicate has formed and subsequently separating crystalline silicate from the mother liquor (e.g. by means of filtration or centrifugation), washing the crystalline silicate thus obtained and drying (suitably at a temperature of from 100-200 °C), optionally followed by calcining at a temperature of from 200-600 °C.

The present invention also relates to composite crystalline aluminium silicate which has been prepared according to a process as described hereinbefore.

The crystalline silicates prepared according to the present process contain alkali metal. An alkali metal content of more than 0.1 % by weight is undesirable, however, when the composite crystalline aluminium silicates are to be used as catalyst or catalyst carrier in the catalytic dewaxing of hydrocarbon oils, to which process the present invention further relates. In order to reduce the alkali metal content of the composite silicates to less than 0.1 % by weight and in particular to less than 0.01 % by weight, the silicates are suitably contacted once or several times with an aqueous solution which comprises ammonium ions. From the $NH_4^+$ silicates obtained in this manner the $H^+$ silicates can be prepared by calcination.

If desired, the performance (e.g. catalytic activity and stability) in a catalytic dewaxing process of the composite silicates which have been treated in this way can be further improved by using them simultaneously as carrier for one or more catalytically active metals from Groups 6b, 7b and 8 of the Periodic Table of the Elements or compounds thereof. Of particular interest are the metals molybdenum, tungsten, chromium, iron, nickel, cobalt, platinum, palladium, ruthenium, rhodium, osmium and irridium; platinum and/or palladium are preferably used because it appears that their presence on the composite silicates inhibits the undesired formation of aromatic compounds, leading to such a high dewaxed product quality that further hydrotreating of the dewaxed product may be avoided. The metals or their compounds may be deposited on the composite silicates by means of any process for the preparation of catalysts known in the art, such as impregnation, ion-exchange or precipitation.

The metal-loaded composite silicates suitably comprise from 1-50- by weight, preferably from 2-20% by weight, of a non-noble metal of Group 6b, 7b and/or 8; noble metals of Group 8 are suitably present in the composite silicate catalysts in an amount from 0,001-5% by weight, preferably from 0.01-2% by weight.

When the composite silicates are used as catalysts or catalyst carriers they should generally be available in the form of particles with a diameter of 0.5-5 mm. In the process according to the present invention the composite silicates are normally obtained in the form of a fine powder. The composite silicates may be shaped to form particles of a larger size, for instance by pressing or extruding. During shaping the silicates may be combined with a binder material, suitably in a weight ratio from 1-10; preferably a binder material is used which contains no or only very little alkali metal such as alumina. Catalytically active metals, especially noble metals, are suitably deposited on the binder material (e.g. by means of ion exchange) before combining it with composite silicate. Preferably, however, an extrudate of composite silicate and a binder material is impregnated with a noble metal (compound) in order to prepare catalysts which show little or no initial deactivation.

The hydrocarbon oils which are to be dewaxed with the composite silicate catalyst (carrier) are preferably selected from the group consisting of lubricating oils and transformer oils (in order to reduce their pour point), and kerosenes and gas oils (in order to reduce their freezing point). Additionally, the present invention relates to hydrocarbon oils which have been dewaxed according to a process as hereinbefore described.

The catalytic dewaxing process according to the present invention may suitably be carried out at a temperature of from 200-500 °C, a hydrogen pressure of from 5-100 bar, a space velocity of from 0.1-5.0 kg.l$^{-1}$.h$^{-1}$ and a hydrogen/oil ratio of from 100-2500 Nl.kg . The process is preferably carried out at a temperature of from 250-450 °C, a hydrogen pressure of from 10-75 bar, a space velocity of from 0.3-3 kg.l$^{-1}$.h$^{-1}$ and a hydrogen/oil ratio of from 200-2000 Nl.Kg$^{-1}$.

Furthermore, the present invention relates to molecular sieves which comprise a composite crystalline aluminium silicate prepared as hereinbefore described, and to the application of such molecular sieves in a process for separating compounds with a substantially unbranched structure from mixtures of these compounds with compounds having a branched and/or cyclic structure. For this application the composite silicate should be at least partly dehydrated.

The invention is illustrated by the following Examples.

EXAMPLE 1

Preparation of composite crystalline aluminium silicate A. An aqueous alkaline starting mixture was prepared by adding to water the following compounds: amorphous silica, aluminium sulphate, sodium sulphate, sodium hydroxide, pyridine and tetrapropyl ammonium hydroxide in such quantities that the starting mixture had the following molar composition:

93.5 SiO$_2$-1 Al$_2$O$_3$-30 C$_6$H$_5$N-0.1 (C$_3$H$_7$)$_4$NOH-7.4 Na$_2$O-19.6 Na$_2$SO$_4$-1938 H$_2$O .

Composite silicate A was prepared by maintaining the starting mixture at 150 °C for 75 hours with stirring in an autoclave under autogenous pressure. After cooling the reaction mixture crystalline aluminium silicate was filtered off, washed with water until the pH of the wash water was about 8 and dried at 120 °C for 16 hours. The so obtained composite silicate A had the characteristic X-ray diffraction pattern given in Table A, in which "D-space" represents the interplanar spacing (in Å) calculated from the measured theta (Bragg angle) by using the Bragg equation and "I/I$_{max}$,%" represents the intensity of a peak, expressed as a percentage of the intensity of the main peak.

## TABLE A

| D-space | I/I$_{max}$,% |
|---------|---------------|
| 9.39 | 52 |
| 3.97 | 76 |
| 3.92 | 49 |
| 3.85 | 100 |
| 3.81 | 76 |
| 3.76 | 69 |
| 3.71 | 49 |
| 3.64 | 56 |
| 3.53 | 89 |
| 3.46 | 74 |

Chemical analysis of composite silicate A showed that its aluminium content was 1.14 % by weight. Composite silicate A is a crystalline intergrowth comprising substantially equal amounts of two different crystalline aluminium silicates which are further indicated as "silicate 1" and "silicate 2". Composite silicate B was prepared by using a similar starting mixture as used for silicate A, except that the molar amount of $(C_3H_7)_4NOH$ was increased from 0.10 to 0.32. The starting mixture was maintained at 150 °C for 93 hours with stirring in an autoclave under autogenous pressure and treated further as described hereinabove for the preparation of silicate A.

The composite silicate B thus obtained gave the characteristic X-ray diffraction pattern as shown in Table B.

## TABLE B

| D-space | I/I$_{max}$,% |
|---------|---------------|
| 11.10 | 50 |
| 9.97 | 25 |
| 3.85 | 100 |
| 3.81 | 69 |
| 3.74 | 41 |
| 3.71 | 59 |
| 3.64 | 37 |
| 3.52 | 16 |
| 3.44 | 22 |

The aluminium content of composite silicate B was 1.06% by weight; composite silicate B comprises a crystalline intergrowth comprising five times as much of silicate 1, compared with the weight of silicate 2 present in the sample.

5

COMPARATIVE EXAMPLE

Crystalline aluminium silicate C was prepared by using a similar aqueous alkaline starting mixture as used in the preparation of composite silicate A, except that the compound $(C_3H_7)_4NOH$ was not present therein. The starting mixture was maintained at 150 °C for 113 hours with stirring in an autoclave under autogenous pressure and treated further as described hereinbefore for the preparation of silicate A. The characteristic X-ray diffraction pattern of crystalline aluminium silicate C is given in the following Table C.

**Table C**

| D-space | $I/I_{max},\%$ |
|---------|----------------|
| 9.43 | 91 |
| 3.97 | 78 |
| 3.92 | 41 |
| 3.76 | 43 |
| 3.53 | 100 |
| 3.46 | 74 |

Silicate C, which was not prepared according to the process of the present invention, comprised substantially silicate 2 and no silicate 1; accordingly silicate C is not a composite crystalline aluminium silicate such as composite silicates A and B.

EXAMPLE 2

Adsorption experiments with composite silicates A and B.

Composite silicates A and B were brought into the hydrogen form by calcining in air at 500 °C for two hours followed by treating the respective silicates 2 times with an aqueous solution of 1.0 N ammonium nitrate. From the $NH_4^+$ silicates obtained in this manner the $H^+$ silicates were prepared by calcining in air at 500 °C for one hour.

In Table D the adsorption capacities measured at 100 °C are given of the hydrogen forms of composite silicates A and B.

**TABLE D**

| Experiment | Silicate | N-hexane, mmol/g | 2,2 dimethyl butane, mmol/g |
|------------|----------|------------------|------------------------------|
| 1 | A | 0.84 | 0.27 |
| 2 | B | 0.99 | 0.68 |

From the results given in Table D it will be clear that of the two silicates A and B composite silicate A is the most selective when applied in a process for separating unbranched n-hexane from branched 2,2 dimethyl butane.

EXAMPLE 3

Dewaxing experiments.

Catalytic dewaxing experiments were carried out in once through operation in a reactor containing a fixed bed of the hydrogen form of composite silicate A or catalyst D, both diluted with silicium carbide particles.

Catalyst D was prepared by extruding a mixture of a composite silicate (prepared in a similar manner as silicate A) with alumina binder material (weight ratio of silicate : alumina = 4 : 1) and impregnating the obtained extrudates with 0.2% by weight of palladium.

A waxy raffinate of North Sea origin comprising 21% by weight of wax, 2.8 ppmw of sulphur and less than 1 ppmw of nitrogen, and having a pour point of $+36\,^{\circ}$C according to ASTM D97 was catalytically dewaxed in the presence of hydrogen under operating conditions given in the following Table E.

## TABLE E

|  | experiment 3 | experiment 4 | experiment 5 |
|---|---|---|---|
| partial hydrogen pressure, bar | 40 | 40 | 40 |
| space velocity, kg feed/l. catalyst/hour | 1.5 | 0.75 | 1.0 |
| average reactor temperature, °C | 345 | 330 | 280 |
| hydrogen feed rate, Nl/kg feed | 700 | 700 | 500 |
| catalyst | silicate A | silicate A | D |

The liquid raffinates obtained in experiments 3, 4 and 5 after catalytic dewaxing were distilled in a vigreux column; the resulting fractions boiling above 300 $^{\circ}$C had pour points of -18 $^{\circ}$C, measured according to ASTM D97. The yield of liquid dewaxed raffinate, calculated as a weight percentage on basis of hydrocarbon feed, was 73 in both experiment 3 and 4 and 71 in experiment 5.

The stability of composite silicate A was evaluated by continuing experiment 3 for 540 hours during which period virtually no change in raffinate yield or in pour point of the dewaxed raffinate was observed.

From the reaction conditions and results shown it is clear that composite silicate A and catalyst D are excellent dewaxing catalysts.

**Claims**

1. Process for the preparation of a composite crystalline aluminium silicate which comprises maintaining an aqueous alkaline starting mixture comprising one or more silicon compounds, one or more aluminium compounds, one or more compounds of metals from Group 1a of the Periodic Table of the Elements (MX) and organic nitrogen compounds at an elevated temperature until composite crystalline aluminium silicate has formed and subsequently separating crystalline silicate from the mother liquor, wherein the various compounds are present in the starting mixture within the following molar ratios:

7

$$RN \quad : \quad R_4NY \quad = \quad 6 - 3,000,$$
$$SiO_2 \quad : \quad R_4NY \quad = \quad 200 - 10,000,$$
$$SiO_2 \quad : \quad Al_2O_3 \quad = \quad 60 - 250,$$
$$SiO_2 \quad : \quad MX \quad < \quad 10, \text{ and}$$
$$H_2O \quad : \quad SiO_2 \quad = \quad 5 - 65,$$

RN representing a pyridine and $R_4NY$ representing an organic quaternary ammonium compound.

2. Process according to claim 1 wherein RN represents a compound selected from the group consisting of pyridine, alkyl pyridines and (substituted alkyl) pyridines.

3. Process according to claim 2 wherein RN represents pyridine.

4. Process according to any of claims 1-3 wherein the groups R in $P_4NY$ comprise four alkyl-groups and/or substituted alkyl-groups and Y represents an anion.

5. Process according to claim 4 wherein $R_4NY$ represents tetrapropyl ammonium hydroxide.

6. Process according to any of claims 1-5 wherein RN and $R_4NY$ are present in the starting mixture in a molar ratio of from 25-600, preferably of from 40-450.

7. Process according to any of claims 1-6 wherein $SiO_2$ and $R_4NY$ are present in the starting mixture in a molar ratio of from 300-2000, preferably of from 450-1500.

8. Process according to any of claims 1-7 wherein MX represents at least one of $M_nZ$ and at least one of MOH in which M represents an alkalimetal ion and Z represents an anion of a mineral acid.

9. Process according to claim 8 wherein $SiO_2$ and MON are present in the starting mixture in a molar ratio of from 5.2-7.8, preferably of from 5.6-7.0.

10. Process according to any of claims 1-9 wherein $SiO_2$, $Al_2O_3$ and $H_2O$ are present in the starting mixture in the following molar ratios:
    $SiO_2 : Al_2O_3 = 65-200$ , and
    $H_2O : SiO_2 = 8-50$

11. Process according to any of claims 1-10 wherein the starting mixture is stirred for 24-190 hours at a temperature of from 100-250 °C under autogenous pressure.

12. Molecular sieves which comprise a composite crystalline aluminium silicate prepared according to a process as claimed in any of claims 1-11.

13. Process for separating compounds with a substantially unbranched structure from mixtures of these compounds with compounds having a branched and/or cyclic structure wherein a molecular sieve according to claim 12 is used which has at least partly been dehydrated.

14. Process for the catalytic dewaxing of hydrocarbon oils wherein the catalyst used comprises a composite crystalline aluminium silicate prepared according to a process as claimed in any of claims 1-11.

15. Process according to claim 14 wherein the catalyst comprises also one or more metals from Groups 6b, 7b and 8 or compounds thereof on the composite crystalline aluminium silicate as carrier.

16. Process according to claim 14 or 15 wherein the hydrocarbon oil to be dewaxed has been selected from the group consisting of lubricating oils, transformer oils, kerosenes and gas oils.

**17.** Process according to any of claims 14-16 which is carried out at a temperature of from 200-500 °C, a hydrogen pressure of from 5-100 bar, a space velocity of from 0.1-5 kg.l.h$^{-1}$ and a hydrogen/oil ratio of from 100-2500 Nl.kg$^{-1}$.

## Revendications

**1.** Procédé de préparation d'un silicate d'aluminium cristallin composite, qui comprend le maintien d'un mélange de départ alcalin aqueux comprenant un ou plusieurs composés du silicium, un ou plusieurs composés de l'aluminium, un ou plusieurs composés de métaux du groupe la du tableau périodique des éléments (MX) et des composés organiques de l'azote à une température élevée jusqu'à ce qu'un silicate d'aluminium cristallin composite soit formé et ensuite la séparation du silicate cristallin de la liqueur-mère, où les divers composés sont présents dans le mélange de départ dans les rapports molaires suivants :

$$RN \quad : \quad R_4NY \quad = \quad 6\text{-}3\ 000$$
$$SiO_2 \quad : \quad R_4NY \quad = \quad 200\text{-}10\ 000$$
$$SiO_2 \quad : \quad Al_2O_3 \quad = \quad 60\text{-}250$$
$$SiO_2 \quad : \quad MX \quad < \quad 10 \text{ et}$$
$$H_2O \quad : \quad SiO_2 \quad = \quad 5\text{-}86$$

RN représentant une pyridine et $R_4NY$ représentant un composé organique d'ammonium quaternaire.

**2.** Procédé selon la revendication 1, dans lequel RN représente un composé choisi dans le groupe constitué par la pyridine, les alcoyl pyridines et des (alcoyl substitué) pyridines.

**3.** Procédé selon la revendication 2, dans lequel RN représente la pyridine.

**4.** Procédé selon l'une quelconque des revendications 1-3, dans lequel les groupes R dans $R_4NY$ comprennent quatre groupes alcoyle et/ou alcoyle substitué et Y représente un anion.

**5.** Procédé selon la revendication 4, dans lequel $R_4NY$ représente l'hydroxyde de tétrapropyl ammonium.

**6.** Procédé selon l'une quelconque des revendications 1-5, dans lequel RN et $R_4NY$ sont présents dans le mélange de départ dans un rapport molaire compris entre 25 et 600, de préférence entre 40 et 450.

**7.** Procédé selon l'une quelconque des revendications 1-6, dans lequel $SiO_2$ et $R_4NY$ sont présents dans le mélange de départ dans un rapport molaire compris entre 300 et 2000, de préférence entre 450 et 1500.

**8.** Procédé selon l'une quelconque des revendications 1-7, dans lequel MX représente au moins un composé de formule $M_nZ$ et au moins un composé de formule MOH, où M représente un ion de métal alcalin et Z représente un anion d'un acide minéral.

**9.** Procédé selon la revendication 8, dans lequel $SiO_2$ et MOH sont présents dans le mélange de départ dans un rapport molaire compris entre 5,2 et 7,8, de préférence entre 5,6 et 7,0.

**10.** Procédé selon l'une quelconque des revendications 1-9, dans lequel $SiO_2$, $Al_2O_3$ et $H_2O$ sont présents dans le mélange de départ dans les rapports molaires suivants :
$SiO_2$ $Al_2O_3$ = 65-200 et
$H_2O : SiO_2$ = 8-50

**11.** Procédé selon l'une quelconque des revendications 1-10, dans lequel le mélange de départ est agité pendant 24-190 heures à une température comprise entre 100 et 250 °C sous la pression spontanée.

12. Tamis moléculaires qui comprennent un silicate d'aluminium cristallin composite préparé selon un procédé tel que revendiqué dans l'une quelconque des revendications 1-11.

13. Procédé pour séparer des composés ayant une structure substantiellement non-ramifiée à partir de mélanges de ces composés avec des composés ayant une structure ramifiée et/ou cyclique, dans lequel on utilise un tamis moléculaire selon la revendication 12 qui a été au moins partiellement déshydraté.

14. Procédé de déparaffinage catalytique d'huiles d'hydrocarbures, dans lequel le catalyseur utilisé comprend un silicate d'aluminium cristallin composite préparé selon un Procédé tel que revendiqué dans l'une quelconque des revendications 1-11.

15. Procédé selon la revendication 14, dans lequel le catalyseur comprend aussi un ou plusieurs métaux des groupes 6b, 7b et 8 ou composés de ces métaux sur le silicate d'aluminium cristallin composite comme support.

16. Procédé selon la revendication 14 ou 15, dans lequel l'huile d'hydrocarbures à déparaffiner a été choisie dans le groupe constitué par les huiles lubrifiantes, les huiles pour transformateurs, les kérosènes et les gazoles.

17. Procédé selon l'une quelconque des revendications 14-16, qui est mis en oeuvre à une température comprise entre 200 et 500−C, sous une pression d'hydrogène comprise entre 5 et 100 bars, à une vitssse spatiale comprise entre 0,1 et 5 kg.l$^{-1}$.h$^{-1}$ et avec un rapport hydrogène/huile compris entre 100 et 2500 Nl.kg$^{-1}$.

## Ansprüche

1. Verfahren zur Herstelltung eines gemischten kristallinen Aluminiumsilikats, welches ein Halten einer wäßrigen alkalischen Ausgangsmischung, die ein oder mehrere Siliziumverbindungen, eine oder mehrere Aluminiumverbindungen, eine oder mehrere Verbindungen von Metallen aus der Gruppe 1a des Periodensystems der Elemente (MX) und organische Stickstoffverbindungen umfaßt, bei einer erhöhten Temperatur bis zur Ausbildung eines gemischten kristallinen Aluminiumsilikats und ein anschließendes Abtrennen des kristallinen Silikats von der Mutterlauge umfaßt, worin die verschiedenen Verbindungen im Ausgangsgemisch in den folgenden Molverhältnissen vorliegen:

$$
\begin{aligned}
RN &: R_4NY = 6\text{--}3000, \\
SiO_2 &: R_4NY = 200\text{--}10000, \\
SiO_2 &: Al_2O_3 = 60\text{--}250, \\
SiO_2 &: MX \quad 10, \text{ und} \\
H_2O &: SiO_2 = 5\text{--}65,
\end{aligned}
$$

worin RN ein Pyridin darstellt und R$_4$NY eine organische quaternäre Ammoniumverbindung bedeutet.

2. Verfahren nach Anspruch 1, worin RN eine aus der aus Pyridin, Alkylpyridinen und (substituierten Alkyl)-Pyridinen bestehenden Gruppe ausgewählte Verbindung bedeutet.

3. Verfahren nach Anspruch 2, worin RN für Pyridin steht.

4. Verfahren nach eine der Ansprüche 1 bis 3, worin die Gruppen R in R$_4$NY vier Alkylgruppen und/oder substituierte Alkylgruppen darstellen und Y ein Anion bedeutet.

5. Verfahren nach Anspruch 4, worin R$_4$NY für Tetrapropylammoniumhydroxid steht.

6. Verfahren nach einem der Ansprüche 1 bis 5, worin RN und R$_4$NY im Ausgangsgemisch in einem

10

Molverhältnis von 25 bis 600, vorzugsweise von 40 bis 450 vorliegen.

7. Verfahren nach einem der Ansprüche 1 bis 6, worin $SiO_2$ und $R_4NY$ im Ausgangsgemisch in einem Molverhältnis von 300 bis 2.000, vorzugsweise von 450 bis 1.500 vorliegen.

8. Verfahren nach einem der Ansprüche 1 bis 7, worin MX für wenigstens ein $M_nZ$ und wenigstens ein MOH steht, worin M ein Alkalimetallion darstellt und Z ein Anion einer Mineralsäure bedeutet.

9. Verfahren nach Anspruch 8, worin $SiO_2$ und MOH im Ausgangsgemisch in einem Molverhältnis von 5,2 bis 7,8, vorzugsweise von 5,6 - 7,0 vorliegen.

10. Verfahren nach einem der Ansprüche 1 bis 9, worin $SiO_2$, $Al_2O_3$ und $H_2O$ im Ausgangsgemish in den folgenden Molverhältnissen vorliegen:
    $SiO_2 : Al_2O_3$ = 65 - 200, und
    $H_2O : SiO_2$ = 8 - 50 .

11. Verfahren nach einem der Ansprüche 1 bis 10, worin das Ausgangsgemisch 24 bis 190 Stunden bei einer Temperatur von 100 bis 250°C unter autogenem Druck gerührt wird.

12. Molekularsiebe, welche ein gemischtes kristallines Aluminiumsilikat, hergestellt nach einem Verfahren, wie in einem der Ansprüche 1 bis 11

13. Verfahren zur Abtrennung von Verbindungen mit einer im wesentlichen unverzweigten Struktur aus Gemischen dieser Verbindungen mit Verbindungen mit einer verzweigten und/oder cyclischen Struktur, worin ein Molekularsieb nach Anspruch 12 verwendet wird, das zumindest teilweise dehydratisiert worden ist.

14. Verfahren zum katalytischen Entwachsen von Kohlenwasserstoffölen, worin der verwendete Katalysator ein gemischtes kristallines Aluminiumsilikat, hergestellt gemäß einem Verfahren, wie in einem der Ansprüche 1 bis 11 beansprucht, umfaßt.

15. Verfahren nach Anspruch 14, worin der Katalysator auch ein oder mehrere Metalle aus den Gruppen 6b, 7b und 8 oder Verbindungen hievon auf dem gemischten kristallinen Aluminiumsilikat als Träger umfaßt.

16. Verfahren nach Anspruch 14 oder 15, worin das zu entwachsende Kohlenwas serstofföl aus der aus Schmierölen, Transformatorölen, Kerosinen und Gasölen bestehenden Gruppe ausgewählt worden ist.

17. Verfahren nach einem der Ansprüche 14 bis 16, welches bei einer Temperatur von 200 bis 500°C, einem Wasserstoffdruck von 5 bis 100 bar, einer Raumgeschwindigkeit von 0,1 bis 5 $Kg.l^{-1}.h^{-1}$ und einem Wasserstoff/Öl-Verhältnis von 100 bis 2.500 $Nl.Kg^{-1}$ ausgeführt wird.